# NEUE EUROPÄISCHE PATENTSCHRIFT

(11) **EP 1 526 976 B2**
(45) Veröffentlichungstag und Bekanntmachung des Hinweises auf die Entscheidung über den Einspruch: **06.04.2016**
(45) Hinweis auf die Patenterteilung: 28.10.2009
(21) Anmeldenummer: 03783970.1
(22) Anmeldetag: 26.05.2003
(51) Int. Cl.: B60H 1/00

(54) **KLIMAGEHÄUSE**
AIR-CONDITIONER HOUSING
BOITIER DE CLIMATISATION

(30) Priorität: 29.07.2002 DE 10235513; 17.12.2002 DE 10261037
(43) Veröffentlichungstag der Anmeldung: 04.05.2005
(73) Patentinhaber: MAHLE Behr GmbH & Co. KG, 70469 Stuttgart (DE); Mahle Behr France Rouffach S.A.S, 68250 Rouffach (FR)
(72) Erfinder: KLEIN, Henri, F-68000 Colmar (FR); KOUKOURAVAS, Evripidis, 72654 Nekartenzlingen (DE)
(74) Vertreter: Grauel, Andreas
(86) Internationale Anmeldenummer: PCT/EP2003/005518
(87) Internationale Veröffentlichungsnummer: WO 2004/014676

(56) Entgegenhaltungen:
- EP-A- 1 070 611
- WO-A-96/29211
- DE-A- 19 919 132
- DE-C- 19 919 975
- US-A- 5 975 422
- US-B1- 6 192 698

## Beschreibung

Die Erfindung betrifft ein Klimagehäuse gemäß Oberbegriff des Anspruchs 1.

Klimagehäuse der hier angesprochenen Art werden insbesondere im Zusammenhang mit Fahrzeugklimatisierungseinrichtungen eingesetzt, die zur Heizung und Klimatisierung des Fahrzeuginnenraums dienen. Ein Klimagehäuse der hier angesprochenen Art ist beispielsweise aus der europäischen Patentanmeldung EP 1070611 A1 bekannt. Es weist eine Verdampfungseinrichtung, eine Heizungseinrichtung und eine Luftsteuereinrichtung auf, die im Inneren des Klimagehäuses untergebracht sind, in dem Luftströmungspfade ausgebildet werden, um die in das Klimagehäuse strömende Luft mehr oder weniger zu heizen und zu kühlen und in verschiedene Bereiche eines Fahrzeugs zu verteilen. Es hat sich dabei herausgestellt, dass es nur mit großem Bauaufwand möglich ist, unterschiedliche Bereiche des Fahrzeuginnenraums mit Luftströmen unterschiedlicher Temperatur zu versorgen.

Aufgabe der Erfindung ist es daher, ein Klimagehäuse zu schaffen, das bei kleiner Bauform die Möglichkeit bietet, unterschiedliche Bereiche des Fahrzeuginnenraums mit Luftströmen verschiedenerTemperatur zu versorgen.

Zur Lösung dieser Aufgabe wird ein Klimagehäuse vorgeschlagen, das die in Anspruch 1 genannten Merkmale zeigt. Es zeichnet sich dadurch aus, dass ein erster Luftströmungspfad und ein zweiter Luftströmungspfad ausgebildet sind, und dass eine Luftsteuereinrichtung mindestens zwei Mischklappen aufweist, von denen eine erste dem ersten Luftströmungspfad und eine zweite dem zweiten Luftströmungspfad zugeordnet ist. Die Mischklappen sind so angeordnet und ausgebildet, dass sie den zugehörigen Luftströmungspfad in einer ersten Funktionsstellung völlig freigeben und in einer zweiten Funktionsstellung gänzlich verschließen. Auf diese Weise ist es möglich, unterschiedliche Luftströmungspfade unabhängig voneinandermitseparaten Mischklappen so zu beeinflussen, dass die Temperaturverhältnisse in den Luftströmungspfaden separat einstellbar ist.

Weitere Ausgestaltungen ergeben sich aus den Unteransprüchen.

Die Erfindung wird im Folgenden anhand der Zeichnung näher erläutert. Es zeigen:
- Figur 1: eine Prinzipskizze eines Klimagehäuses in einer Betriebsart für maximale Kühlleistung;
- Figur 2: eine Prinzipskizze eines Klimagehäuses in einer Betriebsart für maximale Heizleistung;
- Figur 3: eine Schnittdarstellung eines Klimagehäuses mit Mischklappen in verschiedenen Funktionsstellungen;
- Figur 4: eine perspektivische Ansicht einer Mischklappe, und
- Figur 5: eine Schnittdarstellung durch einen Teil eines Klimagehäuses.

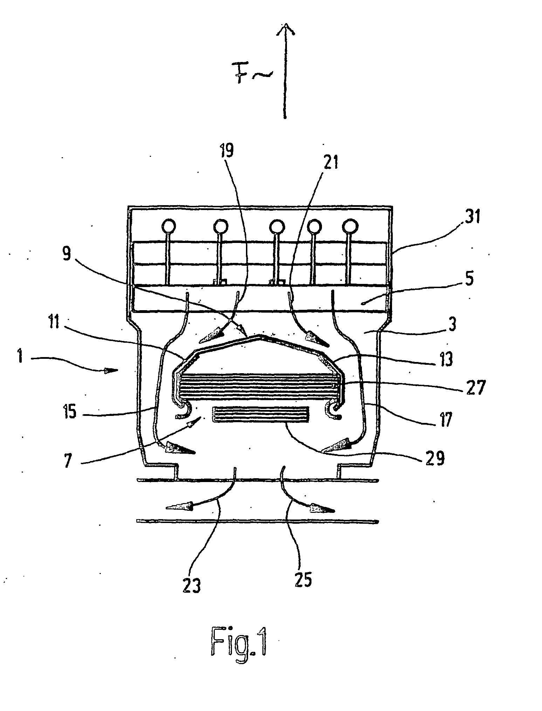

Figur 1 zeigt eine Prinzipskizze eines Klimagehäuses 1 im Schnitt, so dass der Innenraum 3 des Klimagehäuses 1 sichtbar ist. Das Klimagehäuse 1 ist hier in Draufsicht dargestellt, wobei die in Figur 1 obere Seite des Klimagehäuses 1 in Fahrtrichtung weist (Pfeil F). In diesem befindet sich eine Verdampfungseinrichtung 5, außerdem eine Heizungseinrichtung 7, sowie eine Luftsteuerungseinrichtung 9. Diese umfasst eine erste Mischklappe 11 sowie eine zweite Mischklappe 13, die sich in einer ersten Funktionsstellung befinden und damit zwei Luftströmungspfade 15 und 17 freigeben, die durch Pfeile angedeutet sind.

Die durch ein hier nicht dargestelltes Gebläse in das Klimagehäuse 1 eingebrachte Luft durchströmt die Verdampfungseinrichtung 5 und wird dort gekühlt. In der Darstellung gemäß Figur 1 von vorn nach hinten strömende Luft wird durch die erste und zweite Mischklappe 11, 13 abgelenkt und an der Heizungseinrichtung 7 vorbeigeführt, was durch Pfeile 19 und 21 angedeutet ist, so dass die Luftströmungspfade 15 und 17 gebildet werden. Die kalte Luft tritt hinten aus dem Klimagehäuse 1 aus, was durch Pfeile 23 und 25 angedeutet ist.

Die Mischklappen 11 und 13 decken die Heizungseinrichtung 7 vollständig ab, so dass durch diese in der hier dargestellten Betriebsart des Klimagehäuses keine Luftanteile strömen und somit die maximale Kühlleistung zur Verfügung gestellt wird.

Das Klimagehäuse 1 ist also in einer Betriebsart dargestellt, in der die Luft ausschließlich durch die Verdampfungseinrichtung 5 strömt und dort gekühlt wird. Sie wird durch die Luftsteuerungseinrichtung 9 vollständig an der Heizeinrichtung 7 vorbeigeführt, wobei im Innenraum 3 des Klimagehäuses 1 die beiden Luftströmungspfade 15 und 17 ausgebildet werden, die das Klimagehäuse 1 verlassen und entsprechend den Pfeilen 23 und 25 in den Innenraum eines Fahrzeugs geleitet werden.

Figur 1 zeigt, dass die Heizungseinrichtung 7 zentral im Innenraum 3 angeordnet ist, so dass rechts und links von der Heizungseinrichtung 7 die Luft im Bereich der Luftströmungspfade 15 und 17 um die Heizungseinrichtung 7 herumgeführt werden kann. Bereits aus der Prinzipskizze ist ersichtlich, dass die Heizungseinrichtung 7 durch die Mischklappen 11 und 13 der Luftsteuerungseinrichtung 9 flächig abgedeckt wird und somit einen nur geringen Luftwiderstand bietet. Dies führt einerseits dazu, dass der Luftwiderstand innerhalb des Klimagehäuses 1 relativ gering ist, so dass bei gleichbleibender Gebläseleistung bei dem hier dargestellten Klimagehäuse 1 die Luftmenge größer ist als bei herkömmlichen Klimagehäusen, andererseits ist auch die Geräuschentwicklung geringer, was den Komfort innerhalb des Fahrzeugs erhöht.

Die Prinzipskizze zeigt, dass die Heizeinrichtung 7 einen regulären Heizkörper 27 aufweist, der über das Kühlwasser eines Kraftfahrzeugs Wärme liefern kann, außerdem ein elektrisches Heizelement 29, beispielsweise eine PTC-Heizung.

Das Klimagehäuse 1 weist ein Gehäuse 31 auf, das die Verdampfungseinrichtung, die Heizungseinrichtung und die Luftsteuereinrichtung umschließt.

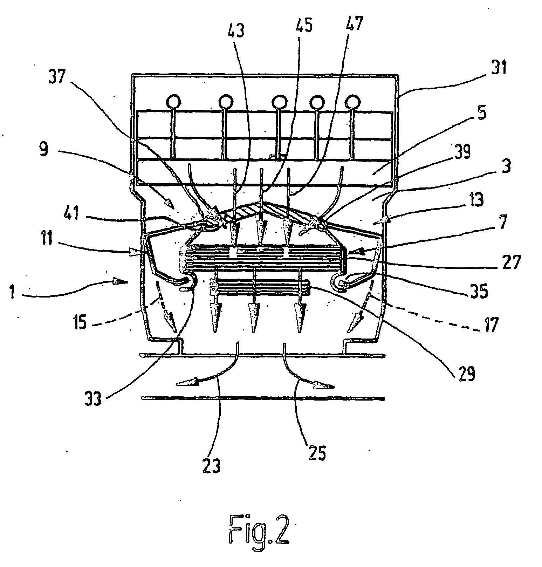

Figur 2 zeigt eine Prinzipskizze des Klimagehäuses 1 in einer Betriebsart für maximale Heizleistung. Gleiche Teile sind mit gleichen Bezugziffern versehen, so dass insofern auf die Beschreibung zu Figur 1 verwiesen wird.

Die in Figur 1 dargestellten Strömungspfade 15 und 17 sind in der hier dargestellten Funktionsstellung der Mischklappen 11 und 13 unterbrochen, daher nur gepunktet dargestellt. Die Mischklappen sind durch hier lediglich angedeutete Antriebe 33 und 35 aus ihrer in Figur 1 dargestellten Position nach außen verschwenkt, so dass sie innen dichtend an der Wandung des Gehäuses 31 anliegen, dabei wird der hintere unmittelbar am Antrieb 33 liegende Teilabschnitt der ersten Mischklappe 11 gegen den Uhrzeigersinn nach links verschwenkt und der hintere Teilabschnitt der zweiten, rechts angeordneten Mischklappe 13, der mit dem Antrieb 35 verbunden ist, im Uhrzeigersinn nach rechts. Die dem Antrieb 33 beziehungsweise 35 abgewandten Enden 37 und 39 der Mischklappen 11 und 13 werden in einer Führung, hier einer Kulissenführung mit einer Laufschiene 41 geführt. Dabei werden die vorderen Teilabschnitte der ersten Mischklappe 11 und der zweiten Mischklappe 13 gegenüber den hinteren Teilabschnitten, die den Antrieben 33 und 35 zugeordnet sind, verschwenkt. Dies ist dadurch möglich, dass die Mischklappen zweiteilig ausgebildet sind und der vordere der Laufschiene 41 zugeordnete Teilabschnitt der Mischklappen 11 und 13 gegenüber dem hinteren Teilabschnitt, der dem Antrieb 33 beziehungsweise 35 zugeordnet ist, beweglich miteinander verbunden sind, vorzugsweise über ein Scharnier. Besonders bevorzugt wird eine Verbindung über ein Filmscharnier. Die bewegliche Verbindung zwischen den beiden Teilabschnitten der Mischklappen 11 und 13 kann auch dadurch realisiert werden, dass in den Verbindungsbereich ein elastisches Material eingespritzt wird. Bei dieser Ausführungsform ist sichergestellt, dass im Verbindungsbereich der Teilabschnitte keine Luft durch die Mischklappen 11 und 13 hindurch treten kann. Denkbar ist es aber auch, die Teilabschnitte der Mischklappen 11 und 13 völlig getrennt auszubilden und im Verbindungsbereich beispielsweise aneinander zu klipsen. Die Teilabschnitte können aber auch über eine gemeinsame Achse miteinander beweglich verbunden werden. Dabei können auch Ausgestaltungen gewählt werden, bei denen im Verbindungsbereich der Teilabschnitte Luft durch die Mischklappen 11 und 13 hindurch treten könnte. Es kann dann auch andererseits bei Bedarf sichergestellt werden, dass der Verbindungsbereich luftdicht abgeschlossen wird.

Auf Grund dieser Ausgestaltung ist es also möglich, den hinteren Teilabschnitt mittels des Antriebs nach außen zu verschwenken und damit den vorderen Teilabschnitt der Mischklappen 11 und 13 nach außen gegen die Gehäusewand 31 zu ziehen. Die Enden 37 und 39 der Mischklappen 11 und 13 werden dabei in der Laufschiene 41 so geführt, dass die durch die Verdampfungseinrichtung 5 strömende Luft entsprechend den Pfeilen 43, 45 und 47 in der zweiten Funktionsstellung ausschließlich durch die Heizungseinrichtung 7 geleitet und von da aus, entsprechend den Pfeilen 23 und 25, in den Innenraum des Fahrzeugs geführt wird.

Da die Mischklappen 11 und 13 die Strömungspfade 15 und 17 vollständig abdecken, kann keine Luft an der Heizungseinrichtung 7 vorbei in den Innenraum des Fahrzeugs gelangen, so dass also die volle Heizleistung zur Verfügung steht.

Aus den Prinzipskizzen der Figuren 1 und 2 ist ersichtlich, dass die Mischklappen 11 und 13 spiegelbildlich ausgebildet und symmetrisch im Klimagehäuse 1 angeordnet sind. Die Antriebe 33 und 35 sind in einem entsprechenden Abstand zueinander auf gegenüberliegenden Seiten der Heizungseinrichtung 7 angeordnet.

Die die beiden Mischklappen 11 und 13 aufweisende Luftsteuerungseinrichtung 9 braucht sehr wenig Bauraum, weil, wie aus Figur 1 ersichtlich, sich die Mischklappen 11 und 13 in ihrer ersten Funktionsstellung, in der die Luftströmungspfade 15 und 17 vollständig freigegeben sind, von außen an die Heizungseinrichtung 7 anlegen. Dabei bilden sie quasi einen flachen Giebel über der Heizungseinrichtung 7, so dass diese flächig abgedeckt wird, was die oben genannten Vorteile bringt. Außerdem zeigt sich, dass sehr wenig Bauraum zwischen der Verdampfungseinrichtung 5 und der Heizungseinrichtung 7 erforderlich ist, was wiederum sehr vorteilhaft für die kompakte Bauweise des Klimagehäuses 1 ist.

Der Antrieb 33 und 35 kann auf unterschiedliche Weise realisiert werden. Entscheidend ist, dass die hinteren Teilabschnitte der Mischklappen 11 und 13 durch den Antrieb 33 beziehungsweise 35 verschwenkt werden können, um einerseits den Luftstrom durch die Heizungseinrichtung 7 freizugeben oder andererseits diesen Luftstrom vollständig abzuschließen und die Luftströmungspfade 15 und 17 freizugeben.

Es ist möglich, den durch die Heizungseinrichtung 7 gegebenen Luftstrom, der durch die Pfeile 43 bis 47 in Figur2 angedeutetwird, zu teilen und zwei getrennte Luftströmungspfade durch die Heizungseinrichtung 7 zu gewährleisten. Es ist damit möglich, einen Warmluftstrom entsprechend dem Pfeil 23 auf die linke Seite eines Fahrzeugs zu führen und einen Warmluftstrom entsprechend dem Pfeil 25 auf die rechte Seite eines Fahrzeugs zu leiten. Entsprechend würde dann der erste Luftströmungspfad 15 der linken Seite und der zweite Luftströmungspfad 17 der rechten Seite des Fahrzeugsinnenraums zugeordnet.

Werden die Mischklappen 11 und 13 synchron auf und zu gesteuert, ergibt sich eine sogenannte einzonige Klimaanlage. Werden die Mischklappen 11 und 13 unabhängig voneinander von dem jeweilig zugeordneten Antrieb 33 und 35 auf und zu gesteuert, kann die Temperatur auf der rechten und linken Seite eines Fahrgastraums unabhängig voneinander eingestellt werden.

Zusätzlich ist es möglich, die senkrecht zur Bildebene verlaufenden Mischklappen 11 und 13 zweiteilig auszubilden, so dass also links zwei nebeneinander liegende und rechts ebenfalls zwei nebeneinander liegende Mischklappen vorgesehen sind. Die Mischklappen liegen sich dann also paarweise einander gegenüber.

Werden alle vier Mischklappen getrennt und unabhängig voneinander verstellt, ergibt sich eine vier-zonige Klimaanlage. Werden zwei einanderge-genüberliegende Mischklappen unabhängig voneinander und die beiden anderen gegenüberliegenden Mischklappen synchron miteinander bewegt, ergibt sich eine drei-zonige Klimaanlage.

Die Heizungseinrichtung 7 und die Luftsteuerungseinrichtung 9 können als Einheit, als Modul, ausgebildet werden. Es ist damit möglich, auf einfache Weise ein-, zwei-, drei- und vier-zonige Klimaanlagen zu realisieren.

Werden für jede Mischklappe separate Antriebe gewählt, so ist zur Realisierung der verschiedenen Klimaanlagenarten lediglich erforderlich, die Ansteuerung der Antriebe entsprechend auszulegen, also die Antriebe völlig unabhängig voneinander anzusteuern oder gegebenenfalls gegenüberliegende Mischklappen paarweise anzusteuern. Besonders bevorzugt werden die Antriebe als Schrittmotoren ausgelegt, so dass eine feinfühlige Temperatursteuerung oder- regelung realisierbar ist.

Dabei ist es also möglich, die Mischklappen der Luftsteuerungseinrichtung 9 in die erste und zweite Funktionsstellung zu verlagern, also eine maximale Kühlleistung und eine maximale Heizleistung zu gewährleisten. Außerdem können natürlich Zwischenstellungen eingenommen werden, in der die Luft aus der Verdampfungseinrichtung zum Teil entlang der Strömungspfade 15 und 17 verläuft und zum Teil durch die Heizungseinrichtung 7 geführt wird, so dass eine gewünschte Temperatur am Auslass des Klimagehäuses 1 einstellbar ist, wobei eine, zwei, drei oder vier Zonen mit unterschiedlichen -Temperaturen beaufschlagbar sind.

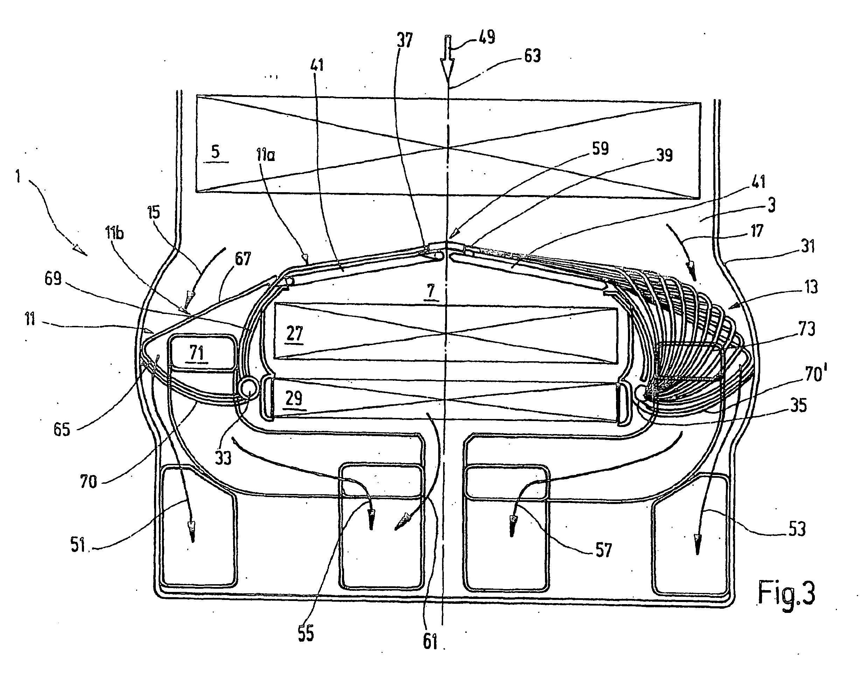

Figur 3 zeigt im Schnitt ein Klimagehäuse 1 mit Mischklappen 11 und 13 einer Luftsteuerungseinrichtung 9 in verschiedenen Funktionsstellungen. Gleiche Teile sind mit gleichen Bezugsziffern versehen, so dass insofern auf die Beschreibung zu den vorangegangenen Figuren verwiesen wird.

Die von einem Gebläse angelieferte Luft, die durch ein Pfeil 49 angedeutet ist, durchläuft die Verdampfungseinrichtung 5 und wird entweder an der Heizungseinrichtung 7 vorbeigeführt und strömt entlang der Luftströmungspfade 15 und 17. Sie kann dabei beispielsweise an den Fußraum links hinten gelangen, was durch einen Pfeil 51 dargestellt ist, oder in den Fußraum rechts hinten, was durch einen Pfeil 53 angedeutet ist. Die Luft kann aber auch zur Belüftung links hinten geführt werden, was durch einen Pfeil 55 angedeutet ist, oder zur Belüftung rechts hinten, was durch einen Pfeil 57 angedeutet ist.

Die Pfeile 51 bis 57 deuten die Kaltluftströme an, die sich insbesondere dann einstellen, wenn die Mischklappen 11 und 13 sich in ihrer auch in Figur 1 dargestellten ersten Funktionsstellung befinden und die Heizungseinrichtung 7 vorne dicht verschließen. Dazu kann in einem Giebelbereich 59 eine senkrecht zur Bildebene verlaufende Dichtschiene vorgesehen werden, gegen die die Enden 37 und 39 der Mischklappen 11 und 13 in ihrer ersten Funktionsstellung anlaufen. Die Enden 37,39 können natürlich auch so ausgeführt werden, dass diese in der ersten Funktionsstellung unmittelbar dicht aneinander liegen.

Figur 3 zeigt noch einmal die Laufschiene 41, in der die Enden 37 und 39 geführt werden, wenn die Mischklappen 11 und 13 aus ihrer ersten Funktionsstellung heraus verlagert werden.

Der hier dargestellte Schnitt lässt den Antrieb 33 der ersten Mischklappe 11 und den Antrieb 35 der zweiten Mischklappe 13 gut erkennen. Die erste Mischklappe 11 ist in zwei Funktionsstellungen wiedergegeben, nämlich in der ersten Funktionsstellung, die mit 11 a gekennzeichnet ist, in der die Heizeinrichtung 7 gegenüber der Verdampfungseinrichtung 5 abgeschlossen ist, undinderzweiten Funktionsstellung 11b, in der der Strömungspfad 15 unterbrochen und die gesamte Luft von der Verdampfungseinrichtung 5 durch die Heizungseinrichtung 7 geleitet wird und entsprechend dem Pfeil 61 zum linken Fußraum und zur linken Belüftung gelangt. Die Luft kann auch auf die rechte Seite des Fahrzeugsinnenraums gelangen, wenn hier nicht eine senkrechte in der Mittelebene 63 liegende Trennwand vorgesehen ist, die dann gegeben sein muss, wenn die rechte und linke Seite des Fahrzeugsinnenraums mit unterschiedlichen Temperaturen beaufschlagt werden soll, sei es bei der Zwei-Zonen- oder bei der Vier-Zonen-Klimaanlagen.

Die paarweise gegenüberliegend angeordneten Mischklappen 11 und 13 können synchron über die Antriebe 33 und 35 angesteuert werden oder aber, wie oben dargestellt, getrennt, um die Temperatur im rechten und linken Fahrzeugbereich unterschiedlich einstellen zu können.

Auf der rechten Seite ist die zweite Mischklappe 13 in verschiedenen Funktionsstellungen dargestellt, um anzudeuten, dass die dem rechten Strömungspfad 17 folgende Kaltluft mehr oder weniger abgeregelt werden kann, um mehr oder weniger Luft durch die Heizungseinrichtung 7 zu führen.

Figur3 zeigt deutlich, dass die erste Mischklappe 11 eine erste Teilmischklappe 65 im unteren Teilabschnitt und eine zweite Teilmischklappe 67 im oberen Teilabschnitt aufweist, die gelenkig so miteinander verbunden sind, dass der zwischen den Teilmischklappen 65 und 67 eingeschlossene Winkel variabel ist: In der ersten Funktionsstellung, in der die Heizungseinrichtung 7 abgeschlossen wird, schließen die beiden Teilmischklappen 65 und 67 einen stumpfen Winkel ein, in der zweiten Funktionsstellung, in der der erste Strömungspfad 15 unterbrochen ist, schließen die Teilmischklappen 65 und 67 einen spitzen Winkel miteinander ein. Die beiden Teilmischklappen sind also beweglich, das heißt schwenkbar, aneinander befestigt, vorzugsweise durch ein Filmscharnier. Andere Ausführungsarten der Verbindung wurden oben erläutert.

Die zweite Mischklappe 13 ist symmetrisch ausgebildet wie die erste Mischklappe 11, so dass hier nicht weiter darauf eingegangen wird.

Sollte das Klimagehäuse 1 nicht nur zwei paarweise aneinander zugeordnete Mischklappen 11 und 13 aufweisen, sondern vier, so befindetsich das zweite Paar hinter dem ersten Paar der Mischklappen, die senkrecht in die Bildebene 3 hineinverlaufen. Dabei ist es möglich, den Mischklappen einen gemeinsamen Antrieb zuzuordnen oder jeder Mischklappe einen separaten Antrieb, um möglichstflexibel eine bis vier Zonen des Fahrgastinnenraums mit Luft unterschiedlicher Temperatur beaufschlagen zu können.

Figur 3 zeigt noch mal deutlich, dass die Luftsteuerungseinrichtung 9 sehr wenig Raumbedarf hat, weil die Mischklappen sich in der ersten Funktionsstellung unmittelbar an das Gehäuse 69 der Heizungseinrichtung 7 anlegen. Werden die Mischklappen 11 und 13 in ihre nach außen verschwenkte Position verlagert, so liegen sie mit dem Verbindungsbereich der beiden Teilmischklappen an der Innenwand des Gehäuses 31 dichtend an, so dass es hier keiner weiteren Dichtungseinrichtungen bedarf, was den Bauaufwand für das Klimagehäuse 1 und dessen Komplexität wesentlich reduziert.

Die Mischklappen 11 und 13 weisen an ihren Seitenkanten Dichtungseinrichtungen auf, vorzugsweise eine umlaufende Dichtkante, die an der Innenseite des Gehäuses 31 anliegt und verhindert, dass seitlich an den Mischklappen Luft vorbeiströmen kann. Dadurch kann einevölligeTrennung der im Klimagehäuse 1 gegebenen Luftströmungen gewährleistet werden. Sogenannte Kriechöffnungen werden also vermieden.

Bei der in Figur 3 gewählten Darstellung liegen die Dichtkanten auf den dem Betrachter zugewandten Seitenkanten der Mischklappe 11 beziehungsweise deren Teilmischklappen 65 und 67 und der Mischklappe 13, das heißt deren Teilmischklappen.

Zusätzlich kann noch an der Innenwand des Gehäuses31, an der die Seitenkanten der Mischklappen 11 und 13 entlang verlaufen, rechts und links eine Dichtkante 70, 70' vorgesehen werden, die in den Innenraum des Gehäuses 31 etwas vorspringt und quasi als Anschlag für die Mischklappen 11 und 13 in ihrer zweiten Funktionsstellung dient. Dazu ist die Kontur der Dichtkante 70, 70' an die Kontur der ersten Teilmischklappe 65 der beiden Mischklappen 11 und 13 angepasst, so dass diese flächig dichtend an der Dichtkante 70, 70' anliegen.

Die Luftsteuerungseinrichtung 9 zeichnet sich durch einen besonders einfachen Aufbau aus. Die unterschiedlichen Temperaturen der am Ausgang des Klimagehäuses 1 austretenden Luft lassen sich allein mit den Mischklappen, von denen hier die Mischklappen 11 und 13 dargestellt sind, einstellen.

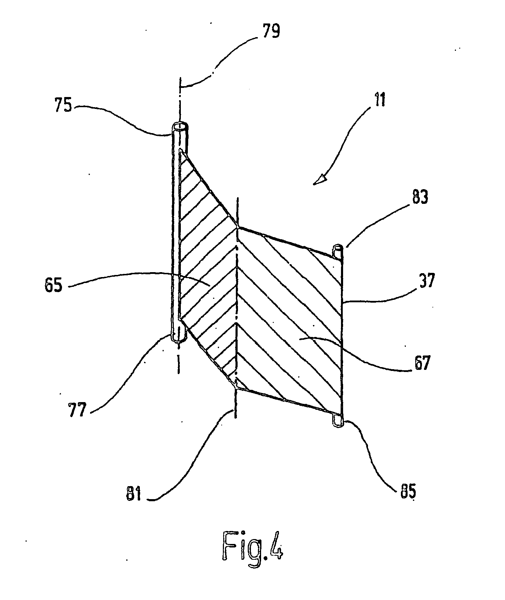

Figur 4 zeigt in perspektivischer Ansicht eine Mischklappe, beispielhaft die Mischklappe 11 der Luftstreuereinrichtung 9. Deutlich erkennbar sind hier die erste Teilmischklappe 65 und die zweite Teilmischklappe 67, die gelenkig miteinander verbunden sind, vorzugsweise über ein Filmscharnier.

Links sind Wellenstummel 75 und 77 vorgesehen, die mit einem geeigneten Antrieb zusammenwirken können, der oben beschrieben wurde und dazu dient, die Mischklappe 11 zu betätigen, indem die Teilmischklappe 65 um die Drehachse 79 verschwenkt wird.

Insbesondere aus Figur 3 wird anhand der Mischklappe 13 deutlich, dass die zweite Teilmischklappe 67 beim Verschwenken der ersten Teilmischklappe 65 um eine Schwenkachse 81 verschwenkt wird, wobei diese auf einer Kreisbahn um die Drehachse 79 verlagert wird. Dies gilt natürlich auch für die symmetrisch ausgebildet und angeordnete Mischklappe 11.

An dem den Wellenstummeln 75 und 77 gegenüberliegenden Ende 37 der Mischklappe 11 sind zwei Führungsstifte 83 und 85 erkennbar, die Teil der Führung der Mischklappe 11 sind und in der Laufschiene 41 verlagert werden.

Hier ist ersichtlich, dass vorzugsweise auf beiden Seiten einer Mischklappe Führungen, also Laufschienen vorhanden sind.

Figur 4 zeigt deutlich, dass die Mischklappe 11 sehr einfach aufgebaut ist. Der hier dargestellte Aufbau gilt für alle Mischklappen eines Klimagehäuses 1, das anhand der Figuren 1 bis 3 erläutert wurde. Es zeigt sich darüber hinaus, dass der Raumbedarf einer derartigen Mischklappe sehr gering ist, so dass das Klimagehäuse 1 sehr kompakt sein kann.

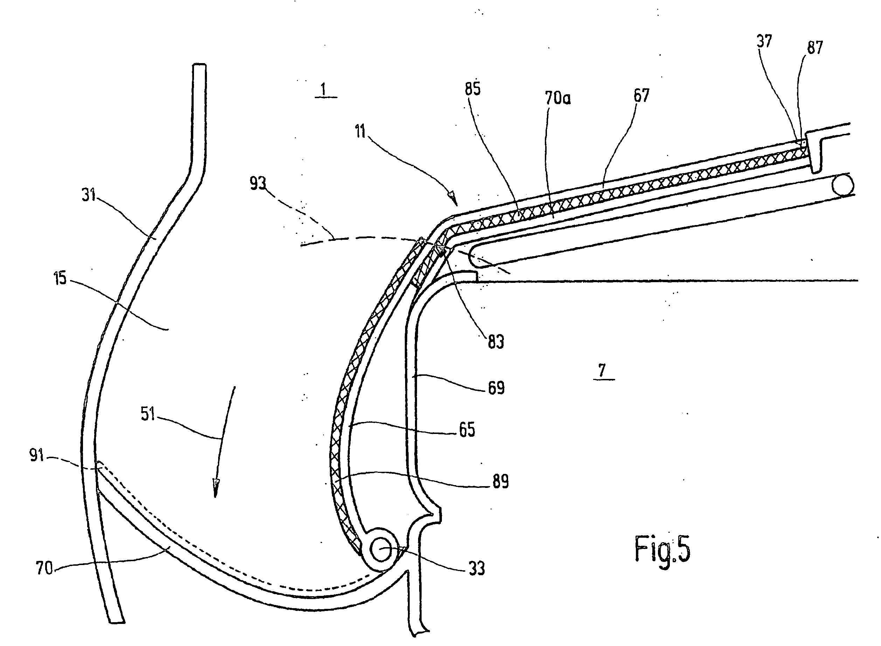

Figur 5 zeigt in einer Schnittdarstellung einen Teil eines Klimagehäuses 1 in starker Vergrößerung. Gleiche Teile sind mit gleichen Bezugsziffern versehen, so dass insofern auf die Beschreibung zu den vorangegangenen Figuren verwiesen wird.

Figur 5 zeigt einen Teil des Gehäuses 69, welches die hier nicht im Einzelnen dargestellte Heizeinrichtung 7 umgibt. Die Mischklappe 11 ist hier in ihrer ersten Funktionsstellung dargestellt, so dass in das Klimagehäuse 1 einströmende Luft nicht durch die Heizeinrichtung 7 hindurch geführt wird. Diese ist vielmehr durch die Mischklappe 11 vollständig abgeschlossen.

Die Mischklappe 11 weist wiederum zwei Teilmischklappen 65 und 67 auf, die beweglich miteinander verbunden sind. Der Verbindungsbereich 83 ist hier durch einen Pfeil gekennzeichnet.

Die Teilmischklappe 67 liegt in dem hier dargestellten geschlossenen Zustand der Mischklappe 11 entlang ihrer Seitenkante auf einer ersten Klappendichtung 85 flächig auf, so dass an den Seitenkanten keine Luft vorbeiströmen und in die Heizeinrichtung 7 gelangen kann. Die erste Klappendichtung 85 liegt auf einer Dichtkante 70 a auf und wird damit flächig gegen die Unterseite der zweiten Teilmischklappe 67 der Mischklappe 11 angedrückt. Das Ende 37 der Mischklappe 11 wird in der hier dargestellten Funktionsstellung gegen einen Dichtstreifen 87 angepresst, um in geschlossenem Zustand der Mischklappe 11 einen Luftstrom durch die Heizeinrichtung 7 zu vermeiden. Diese wird in der Regel permanent von einem Heizmedium, beispielsweise der Kühlflüssigkeit einer Brennkraftmaschine durchströmt. Es muss daher verhindert werden, dass die Wärme aus der Heizeinrichtung 7 in den das Klimagehäuse 1 durchströmenden Luftstrom gelangt, wenn die maximale Kühlleistung abgefragt wird.

An dem dem Ende 37 abgewandten Bereich der Mischklappe 11 ist ein Antrieb 33 vorgesehen, der die erste Teilmischklappe 65 verschwenkt, wobei dann jeweils die zweite Teilmischklappe 67 mitbewegt wird. Die erste Teilmischklappe 65 befindet sich in Figur 5 in ihrer vollständig nach rechts verschwenkten Position, in der die Mischklappe 11 die Heizeinrichtung 7 dichtend abschließt, das gesamte Luftvolumen außen um die Heizeinrichtung herumgeführt und damit der durch den Pfeil 51 angedeutete Luftströmungspfad 15 realisiert wird, der nur Kaltluft umfasst.

Bei dem in Figur 5 dargestellten Ausführungsbeispiel ist auf der der Heizeinrichtung 7 abgewandten Außenseite der ersten Teilmischklappe 65 eine zweite Klappendichtung 89 vorgesehen, die sich vom Antrieb 33 bis zum Verbindungsbereicht 83 erstreckt. Wird die erste Teilmischklappe 65 durch den Antrieb 33 nach links, also gegen den Uhrzeigersinn, geschwenkt, liegt die zweite Klappendichtung 89 an der Innenfläche des Gehäuses 31 und an der Dichtkante 70 an.

Wird also die Mischklappe 11 gegen den Uhrzeigersinn ganz in ihre nach außen geschwenkte Position verlagert, so wird der erste Luftströmungspfad 15 durch die zweite Klappendichtung 85 dicht abgeschlossen, so dass keine Kaltluft aus dem Klimagehäuse 1 herausströmen kann. Dergesamte Luftstrom wird also durch die Heizeinrichtung 7 geführt.

Es zeigt sich hier, dass, wie durch eine gestrichelte Linie 91 angedeutet, die im Bereich der ersten Teilmischklappe 65 vorgesehene zweite Klappendichtung 89 auch weggelassen und stattdessen auf der Dichtkante 70 vorgesehen werden kann. Damit wirkt die erste Teilmischklappe 65 ausschließlich als Betätigungsorgan für die zweite Teilmischklappe 67 und muss zur Abdichtung des ersten Luftströmungspfads 15 nicht mehr beitragen.

Figur 5 zeigt auch, dass die erste Klappendichtung 85, die zumindest im Bereich derzweiten Teilmischklappe 67 vorgesehen ist, sich über den Verbindungsbereich 83 hinaus erstrecken kann, so dass in der hier dargestellten ersten Funktionsstellung die erste Teilmischklappe 65 bereichsweise auch an der ersten Klappendichtung 85 anliegt. Damit ist es möglich, den Verbindungsbereich 83, wie oben erläutert, auch so auszubilden, dass durch diesen grundsätzlich Luft hindurchströmen kann. Dies führt deshalb nicht zu einem Nachteil, weil in dem hier dargestellten Fall, in dem die Heizeinrichtung 7 abgedichtet werden soll, die erste Klappendichtung 85 über den Verbindungsbereich 83 hinwegreicht und diesen damit von innen dichtend abschließt.

Bei einer Schwenkbewegung der ersten Teilmischklappe 65 durch den Antrieb 33 wird der Verbindungsbereich 83 auf einer gedachten Kreisbahn 93 verlagert. Da der Antrieb 33 links vom Verbindungsbereich 83 angeordnet ist, wird beim Verschwenken der ersten Teilmischklappe 65 nach links das dem Verbindungsbereich 83 zugewandte Ende der zweiten Teilmischklappe von der Klappendichtung 85 abgehoben. Ein Verschleiß der Klappendichtung 85 wird auf diese Weise deutlich reduziert, weil bei einer Schwenkbewegung der ersten Teilmischklappe 65 die zweite Teilmischklappe 67 praktisch nur mit ihrem Ende 37 auf der Klappendichtung 85 entlang verlagert wird. Andererseits wird beim Verschließen der Heizeinrichtung 7 der Verbindungsbereich 83 dicht gegen die Klappendichtung 85 angepresst, damit auch das dem Ende 37 abgewandte Ende der zweiten Teilmischklappe 67.

Bei einer Schwenkbewegung der ersten Teilmischklappe 65 nach rechts, also im Uhrzeigersinn, wird auch das Ende 37 derzweiten Teilmischklappe 67 gegen den Dichtstreifen 87 angedrückt, so dass auch hier ein dichter Abschluss der Heizeinrichtung 7 gewährleistet ist.

Nach allem wird aus Figur 5 deutlich, dass die Mischklappen 11 auf verschiedene Weise realisierbar sein kann: Es ist möglich, unmittelbar an den Teilmischklappen 65 und 67 jeweils eine Klappendichtung 85, 87 vorzusehen. Diese kann jedoch auch an den Dichtkanten 70 und 70 a vorgesehen werden. Insbesondere dann, wenn die zweite Klappendichtung 89 nicht an der ersten Teilmischklappe 65 vorgesehen ist, sondern, wie durch die Linie 91 angedeutet, an der Dichtkante 70, kann die erste Teilmischklappe 65 ausschließlich als Betätigungsorgan für die zweite Teilmischklappe 67 dienen. Diese verschließt, wie beispielsweise aus Figur 3 ersichtlich, den ersten Luftströmungspfad 15 einerseits durch Anlage des Endes 37 an der Klappendichtung 85 und andererseits durch Anlage mit dem Verbindungsbereich 83 an der Innenseite des Gehäuses 31.

## Patentansprüche

1. Klimagehäuses mit einer Verdampfungseinrichtung (5), einer Heizungseinrichtung (7), einer Luftsteuerungseinrichtung (9), einem Innenraum (3), in dem Luftströmungspfade (15,17) ausgebildet sind, und mit einem den Innenraum (3) umgebenden Gehäuse (1), wobei ein erster Luftströmungspfad (15) und ein zweiter Luftströmungspfad (17) ausgebildet sind, und wobei die Luftsteuerungseinrichtung (9) mindestens zwei Mischklappen (11,13) aufweist, von denen eine erste (11) einem ersten Luftströmungspfad (15) und eine zweite (13) dem zweiten Luftströmungspfad (17) zugeordnet ist, und wobei die Mischklappen (11,13) jeweils den zugeordneten Luftströmungspfad (15, 17) in einer ersten Funktionsstellung vollständig freigeben und in einer zweiten Funktionsstellung gänzlich verschließen, **dadurch gekennzeichnet, dass**
- die Heizungseinrichtung (7) in der ersten Funktionsstellung der Mischklappen (11,13) von den Mischklappen flächig abgedeckt wird, so dass die Luft an der Heizungseinrichtung (7) vollständig vorbeigeführt wird, und dass
- die Mischklappen (11,13) jeweils eine erste und eine zweite Teilmischklappe (65,67) umfassen, die über einen Verbindungsbereich (83) beweglich miteinander verbunden sind, wobei
- im Bereich der zweiten Teilmischklappe (67) eine Klappendichtung (85) vorgesehen ist, die zumindest in der ersten Funktionsstellung der Mischklappen (11,13) flächig gegen die Unterseite der zweiten Teilmischklappe (67) gedrückt wird und die sich soweit über den Verbindungsbereich (83) hinaus erstreckt, dass in der ersten Funktionsstellung die erste Teilmischklappe (65) bereichsweise auch an der Klappendichtung (85) anliegt.

2. Klimagehäuse nach Anspruch 1, **dadurch gekennzeichnet, dass** ein dritter und ein vierter Luftströmungspfad ausgebildet sind, und dass die Luftsteuereinrichtung zwei weitere Mischklappen aufweist, von denen eine dem dritten und eine dem vierten Luftströmungspfad zugeordnet ist.

3. Klimagehäuse nach Anspruch 1 oder 2, **dadurch gekennzeichnet, dass** die Mischklappen einem Warmluftstrom zugeordnet sind und diesen in ihrer ersten Funktionsstellung vollständig verschließen.

4. Klimagehäuse nach einem der vorhergehenden Ansprüche,
**dadurch gekennzeichnet, dass** die Mischklappen jeweils einem getrennten Warmluftstrom zugeordnet sind.

5. Klimagehäuse nach einem der vorhergehenden Ansprüche,
**dadurch gekennzeichnet, dass** die Mischklappen (11,13) paarweise symmetrisch ausgebildet sind.

6. Klimagehäuse nach Anspruch 1, **dadurch gekennzeichnet, dass** die Teilmischklappen (65,67) über ein Filmscharnier miteinander verbunden sind.

7. Klimagehäuse nach einem der vorhergehenden Ansprüche, **dadurch gekennzeichnet, dass** die Mischklappen (11,13) an ihrem einen Ende in einer Kulissenführung gelagert und an ihrem anderen Ende mit einem Antrieb (33,35) koppelbar sind.

8. Klimagehäuse nach einem der vorhergehenden Ansprüche, **dadurch gekennzeichnet, dass** die Mischklappen (11,13) an ihren Seitenkanten mit einer vorzugsweise als Dichtkante ausgewählten Dichteinrichtung versehen sind.

9. Klimagehäuse nach einem der vorhergehenden Ansprüche,
**dadurch gekennzeichnet, dass** auf einer Innenwand des Klimagehäuses (1) mindestens eine Dichtkante (70,70') vorgesehen ist, die mit den Mischklappen (11,13) zusammenwirkt.

10. Klimagehäuse nach einem der vorhergehenden Ansprüche, **dadurch gekennzeichnet, dass** in dessen inneren unterschiedliche Strömungspfade für verschiedene Auslässe realisierbar sind.

11. Klimagehäuse nach Anspruch 10, **dadurch gekennzeichnet, dass** die den Auslässen zugeordneten Luftströmungen mittels der Mischklappen (11,13) beeinflussbar sind.

12. Klimagehäuse nach einem der vorhergehenden Ansprüche, **dadurch gekennzeichnet, dass** die Antriebe (33,35) eines Mischklappenpaares (11,13) in einem Abstand zueinander auf gegenüberliegenden Seiten der Heizungseinrichtung (7) angeordnet sind.

13. Klimagehäuse nach einem der vorhergehenden Ansprüche, **dadurch gekennzeichnet, dass** einem Antrieb je zwei Mischklappen zugeordnet sind.

14. Klimagehäuse nach einem der vorhergehenden Ansprüche, **dadurch gekennzeichnet, dass** jeder Mischklappe (11, 13) ein eigener Antrieb (33, 35) zugeordnet ist.

15. Klimagehäuse nach einem der vorhergehenden Ansprüche, **dadurch gekennzeichnet, dass** die Heizungseinrichtung (7) mittig im Klimagehäuse (1) angeordnet ist.

16. Klimagehäuse nach einem der vorhergehenden Ansprüche, **dadurch gekennzeichnet, dass** der erste und zweite Luftströmungspfad (15,17) seitlich an der Heizungseinrichtung (7) vorbeiführen.

17. Klimagehäuse nach einem der vorhergehenden Ansprüche, **dadurch gekennzeichnet, dass** die Mischklappen (11,13) die Heizungseinrichtung (7) in ihrer ersten Funktionsstellung flächig abschließen.

18. Klimagehäuse nach einem der vorhergehenden Ansprüche, **dadurch gekennzeichnet, dass** die Mischklappen (11,13) in ihrer ersten Funktionsstellung am Gehäuse (69) der Heizungseinrichtung (7) anliegen.

## Claims

1. An air conditioner housing with an evaporation device (5), a heating device (7), an air control device (9), an interior space (3) in which air flow paths (15, 17) are formed, and with a housing (1) which surrounds the interior space (3), wherein a first air flow path (15) and a second air flow path (17) are formed and wherein the air control device (9) comprises at least two mixing dampers (11, 13) of which a first (11) is assigned to a first air flow path (15) and a second (13) is assigned to the second air flow path (17), and wherein each of the mixing dampers (11, 13) completely opens the assigned air flow path (15, 17) in a first operational position and completely closes it in a second operational position, **characterised in that**
- the heating device (7) is covered in a planar manner in the first operational position of the mixing dampers (11, 13), so that the air is completely guided past the heating device (7), and **in that**
- each mixing damper (11, 13) comprises a first and a second mixing damper part (65, 67) movably connected to one another by way of a connecting region (83), wherein
- a damper seal (85) provided in the region of the second mixing damper part (67) is pressed in a planar manner against the underside of the second mixing damper part (67) at least in the first operational position of the mixing dampers (11, 13) and extends beyond the connecting region (83) so far that regions of the first mixing damper part (65) also bear against the damper seal (85) in the first operational position.

2. The air conditioner housing according to claim 1, **characterised in that** a third and a fourth air flow path are formed, and **in that** the air control device comprises two further mixing dampers, one of which is assigned to the third air flow path and one of which is assigned to the fourth air flow path.

3. The air conditioner housing according to claim 1 or 2, **characterised in that** the mixing dampers are assigned to a warm air flow and close it off completely in their first operational position.

4. The air conditioner housing according to any of the preceding claims, **characterised in that** each of the mixing dampers is assigned to a separate warm air flow.

5. The air conditioner housing according to any of the preceding claims, **characterised in that** the mixing dampers (11, 13) are designed symmetrical in pairs.

6. The air conditioner housing according to claim 1, **characterised in that** the mixing damper parts (65, 67) are connected to one another by a film hinge.

7. The air conditioner housing according to any of the preceding claims, **characterised in that** the mixing dampers (11, 13) are mounted in a gate at one of their ends and can be coupled to a drive (33, 35) at their other end.

8. The air conditioner housing according to any of the preceding claims, **characterised in that** the mixing dampers (11, 13) are provided with a sealing device which is preferably selected as a sealing edge on their side edges.

9. The air conditioner housing according to any of the preceding claims, **characterised in that** at least one sealing edge (70, 70') acting together with the mixing dampers (11, 13) is provided on an internal wall of the air conditioner housing (1).

10. The air conditioner housing according to any of the preceding claims, **characterised in that** different flow paths for different outlets can be formed in its interior.

11. The air conditioner housing according to claim 10, **characterised in that** the air flows assigned to the outlets can be influenced by means of the mixing dampers (11, 13).

12. The air conditioner housing according to any of the preceding claims, **characterised in that** the drives (33, 35) of a pair of mixing dampers (11, 13) are arranged at a distance from one another on opposite sides of the heating device (7).

13. The air conditioner housing according to any of the preceding claims, **characterised in that** two mixing dampers are assigned to each drive.

14. The air conditioner housing according to any of the preceding claims, **characterised in that** a separate drive (33, 35) is assigned to each mixing damper (11, 13).

15. The air conditioner housing according to any of the preceding claims, **characterised in that** the heating device (7) is arranged centrally in the air conditioner housing (1).

16. The air conditioner housing according to any of the preceding claims, **characterised in that** the first and second air flow paths (15, 17) pass the side of the heating device (7).

17. The air conditioner housing according to any of the preceding claims, **characterised in that** the mixing dampers (11, 13) close off the heating device (7) in a planar manner in their first operational position.

18. The air conditioner housing according to any of the preceding claims, **characterised in that** the mixing dampers (11, 13) bear against the housing (69) of the heating device (7) in their first operational position.

## Revendications

1. Carter de climatisation comprenant un dispositif de vaporisation (5), un dispositif de chauffage (7), un dispositif de commande d'air (9), un espace intérieur (3) dans lequel sont configurés des trajets d'écoulement d'air (15, 17), et un carter (1) entourant l'espace intérieur (3) où sont configurés un premier trajet d'écoulement d'air (15) et un deuxième trajet d'écoulement d'air (17), et où le dispositif de commande d'air (9) comporte au moins deux volets mélangeurs (11, 13) dont un premier (11) est associé à un premier trajet d'écoulement d'air (15) et un deuxième (13) à un deuxième trajet d'écoulement d'air (17), et où les volets mélangeurs (11, 13), à chaque fois, dans une première position fonctionnelle, ouvrent complètement le trajet d'écoulement d'air associé (15, 17) et, dans une deuxième position fonctionnelle, le ferment complètement, **caractérisé en ce que**
- le dispositif de chauffage (7), dans la première position fonctionnelle des volets mélangeurs (11, 13), est recouvert à plat par les volets mélangeurs, de sorte que l'air est guidé en passant en totalité devant le dispositif de chauffage (7), et **en ce que**
- les volets mélangeurs (11, 13) comportent, à chaque fois, un premier et un deuxième volets mélangeurs partiels (65, 67) qui sont reliés entre eux, de façon mobile, par une zone d'assemblage (83), où
- dans la zone du deuxième volet mélangeur partiel (67), il est prévu un joint de volet (85) qui, au moins dans la première position fonctionnelle des volets mélangeurs (11, 13), est appuyé, à plat, contre le dessous du deuxième volet mélangeur partiel (67) et qui s'étend au-delà de la zone d'assemblage (83), **en ce que**, dans la première position fonctionnelle, le premier volet mélangeur partiel (65) vient en appui également, par zones, sur le joint de volet (85).

2. Carter de climatisation selon la revendication 1, **caractérisé en ce que** sont configurés un troisième et un quatrième trajets d'écoulement d'air, et **en ce que** le dispositif de commande d'air comporte deux autres volets mélangeurs dont un de ces volets mélangeurs est associé au troisième trajet d'écoulement d'air, l'autre de ces volets mélangeurs étant associé au quatrième trajet d'écoulement d'air.

3. Carter de climatisation selon la revendication 1 ou 2, **caractérisé en ce que** les volets mélangeurs sont associés à un flux d'air chaud et ferment celui-ci, complètement, dans leur première position fonctionnelle.

4. Carter de climatisation selon l'une quelconque des revendications précédentes, **caractérisé en ce que** les volets mélangeurs sont associés à chaque fois à un flux d'air chaud séparé.

5. Carter de climatisation selon l'une quelconque des revendications précédentes, **caractérisé en ce que** les volets mélangeurs (11, 13) sont configurés de façon symétrique, par paires.

6. Carter de climatisation selon la revendication 1, **caractérisé en ce que** les volets mélangeurs partiels (65, 67) sont reliés l'un à l'autre par une charnière pelliculaire.

7. Carter de climatisation selon l'une quelconque des revendications précédentes, **caractérisé en ce que** les volets mélangeurs (11, 13) sont logés, au niveau de l'une de leurs extrémités, dans un guide à coulisse et, au niveau de leur autre extrémité, peuvent être couplés à un entraînement (33, 35).

8. Carter de climatisation selon l'une quelconque des revendications précédentes, **caractérisé en ce que** les volets mélangeurs (11, 13) sont dotés, sur leurs bords latéraux, d'un dispositif d'étanchéité choisi, de préférence, comme un bord d'étanchéité.

9. Carter de climatisation selon l'une quelconque des revendications précédentes, **caractérisé en ce qu'**il est prévu, sur une paroi intérieure du carter de climatisation (1), au moins un bord d'étanchéité (70, 70') qui fonctionne de façon conjointe avec les volets mélangeurs (11, 13).

10. Carter de climatisation selon l'une quelconque des revendications précédentes, **caractérisé en ce que**, à l'intérieur dudit carter de climatisation, divers trajets d'écoulement sont réalisables pour différentes sorties.

11. Carter de climatisation selon la revendication 10, **caractérisé en ce que** les écoulements d'air associés aux sorties peuvent être influencés par les volets mélangeurs (11, 13).

12. Carter de climatisation selon l'une quelconque des revendications précédentes, **caractérisé en ce que** les entraînements (33, 35) d'une paire de volets mélangeurs (11, 13) sont disposés à distance l'un de l'autre, sur des côtés opposés du dispositif de chauffage (7).

13. Carter de climatisation selon l'une quelconque des revendications précédentes, **caractérisé en ce que** deux volets mélangeurs sont associés, à chaque fois, à un entraînement.

14. Carter de climatisation selon l'une quelconque des revendications précédentes, **caractérisé en ce qu'**un entraînement propre (33, 35) est associé à chaque volet mélangeur (11, 13).

15. Carter de climatisation selon l'une quelconque des revendications précédentes, **caractérisé en ce que** le dispositif de chauffage (7) est disposé au milieu du carter de climatisation (1).

16. Carter de climatisation selon l'une quelconque des revendications précédentes, **caractérisé en ce que** le premier et le deuxième trajets d'écoulement d'air (15, 17) passent latéralement devant le dispositif de chauffage (7).

17. Carter de climatisation selon l'une quelconque des revendications précédentes, **caractérisé en ce que** les volets mélangeurs (11, 13), dans leur première position fonctionnelle, ferment à plat le dispositif de chauffage (7).

18. Carter de climatisation selon l'une quelconque des revendications précédentes, **caractérisé en ce que** les volets mélangeurs (11, 13), dans leur première position fonctionnelle, viennent en appui sur le carter (69) du dispositif de chauffage (7).
